# EUROPEAN PATENT APPLICATION

(11) **EP 2 860 634 A1**
(43) Date of publication of application: **15.04.2015**
(21) Application number: 14275093.4
(22) Date of filing: 24.04.2014
(51) Int. Cl.: G06F 11/07, G06F 1/24, G06F 1/28

(54) **Electronic device**

(30) Priority: 26.09.2013 KR 20130114744
(71) Applicant: Samsung Electro-Mechanics Co., Ltd., Suwon-Si, Gyeonggi-Do (KR)
(72) Inventor: Cho, Koon Shik, Gyeonggi-Do (KR); Lee, Jae Hyung, Gyeonggi-Do (KR); Lim, Joon Hyung, Gyeonggi-Do (KR)
(74) Representative: Potter Clarkson LLP

(57) **Abstract**

An electronic device may include; a watchdog timer outputting a watchdog output signal containing system state information; a watchdog control unit outputting a watchdog control signal based on the watchdog output signal; a power-on reset unit outputting a first enable signal after a predetermined period of time after power has been supplied; and a logic circuit outputting a gate signal to the watchdog timer based on the watchdog control signal and the first enable signal.

## Description

### CROSS-REFERENCE TO RELATED APPLICATION

This application claims the benefit of Korean Patent Application No. 10-2013-0114744 filed on September 26, 2013, with the Korean Intellectual Property Office, the disclosure of which is incorporated herein by reference.

### BACKGROUND

The present disclosure relates to an electronic device capable of being restored from an abnormal state.

In the case of circuits using microprocessors or microcomputers, when a system is shut down due to an impact or noise, it is necessary to restore the system by automatically performing a reset operation. Traditionally, a watchdog timer is provided to a circuit so as to monitor system conditions and restore the system from an abnormal state to a normal state.

That is, when a system malfunctions and cannot restore itself to a normal state, a watchdog timer may reset the system.

In order to effectively monitor a system, a watchdog timer may be updated regularly and may perform reset operations regularly or issue an interrupt instruction. Accordingly, if a watchdog timer fails to receive a clear signal (update signal) from a central processing unit (CPU) within a predetermined period of time, the watchdog timer may output a reset request signal.

Generally, a watchdog timer may receive an enable signal from a CPU and may be operated by the enable signal. If the watchdog timer fails to receive the enable signal, it cannot perform its function normally.

For example, if the CPU malfunctions, the watchdog timer cannot receive the enable signal from the CPU, so that it cannot perform its function normally.

Specifically, a CPU includes a plurality of control logic elements (e.g., flip-flops). If noise, ESD or the like is introduced into the CPU from the outside so that the CPU malfunctions, the control logic elements (e.g., flip-flops) cannot output information correctly. As a result, a watchdog timer cannot receive an enable signal from the CPU and thus cannot restore a system to a normal sate.

Moreover, if a reset signal precedes supply voltage due to noise, ESD or the like from the outside (abnormal reset state), the watchdog timer may also malfunction, as well as the CPU. In the malfunctioning state (abnormal state), the watchdog timer cannot operate normally and thus current is persistently consumed. Further, if a system is powered by a battery, the battery may be discharge due to the persistent current consumption.

Therefore, a method is required in which a watchdog timer operates correctly even if a CPU and a watchdog timer malfunction.

Patent Document 1 below relates a watchdog reset apparatus and a method thereof, but does not disclose generating a reset internally in a system so as to restore from an abnormal state.

### [Related Art Document]

(Patent Document 1) Korean Patent Laid-Open Publication No. 10-2006-0093975

### SUMMARY

An aspect of the present disclosure may provide an electronic device capable of generating a reset internally in a system so as to be restored from an abnormal state when a problem occurs in a watchdog function due to certain external factors (such as noise).

According to an aspect of the present disclosure, an electronic device may include: a watchdog timer outputting a watchdog output signal containing system state information; a watchdog control unit outputting a watchdog control signal based on the watchdog output signal; a power-on reset unit outputting a first enable signal after a predetermined period of time after power has been supplied; and a logic circuit outputting a gate signal to the watchdog timer based on the watchdog control signal and the first enable signal.

The watchdog control unit may map an off-state watchdog output signal corresponding to an operation interruption state of the watchdog timer onto a disable watchdog control signal, may map a normal-state watchdog output signal corresponding to an normal operation state of the watchdog timer onto a second enable watchdog control signal, and may map an other-state watchdog output signal corresponding to all other states of the watchdog timer onto a second enable watchdog control signal, except for the off-state and the normal-state watchdog output signals.

If the watchdog timer operates normally, the watchdog timer may output the normal-state watchdog output signal, the watchdog control unit may output the second enable watchdog control signal on which the normal-state watchdog output signal is mapped, and the logic circuit may output a third enable gate signal to operate the watchdog timer normally.

The watchdog timer may output a first reset request signal based on the received third enable gate signal, and the electronic device may further include a reset signal generating unit outputting a reset signal based on the first reset request signal from the watchdog timer, wherein the power-on reset unit outputs a second reset request signal to the reset signal generating unit after a predetermined period of time after power has been supplied.

The power-on reset unit may output the first enable signal to the watchdog timer when the second reset request signal is output.

The electronic device may further include a clock providing unit providing clock information to the watchdog timer, wherein the clock providing unit outputs a fourth enable signal to the watchdog timer when predetermined power is supplied.

The electronic device may further include a brownout detector detecting a level of applied voltage and outputting a third reset request signal to the reset signal generating unit based on the level of the voltage.

According to another aspect of the present disclosure, an electronic device may include: a watchdog timer outputting a watchdog output signal corresponding to an abnormal state of a system when an abnormal reset state occurs; a watchdog control unit outputting a watchdog control signal including enable information based on the watchdog output signal corresponding to the abnormal state of the system; a power-on reset unit outputting a first enable signal after a predetermined period of time after power has been supplied; and a logic circuit outputting a gate signal so that the watchdog timer operates normally based on the watchdog control signal including the enable information and the first enable signal.

The watchdog timer may output a first reset request signal to a target based on the gate signal, and the electronic device may further include a reset signal generating unit outputting a reset signal based on the first reset request signal from the watchdog timer, wherein the power-on reset unit outputs a second reset request signal to the reset signal generating unit after a predetermined period of time after power has been supplied.

The power-on reset unit may output the first enable signal to the watchdog timer when the second reset request signal is output.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a block diagram of an electronic device according to an exemplary embodiment of the present disclosure;
FIG. 2 is a block diagram of an electronic device according to another exemplary embodiment of the present disclosure;
FIGS. 3A through 3C are graphs illustrating waveforms of ) output signals from a brownout detector and a power-on-reset unit according to the level of voltage applied to an electronic device; and
FIG. 4 is a graph illustrating a waveform of an output signal from the high-voltage detector according to the level of voltage applied to an electronic device.

### DETAILED DESCRIPTION

Hereinafter, embodiments of the present disclosure will be described in detail with reference to the accompanying drawings. The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art. In the drawings, the shapes and dimensions of elements may be exaggerated for clarity, and the same reference numerals will be used throughout to designate the same or like elements.

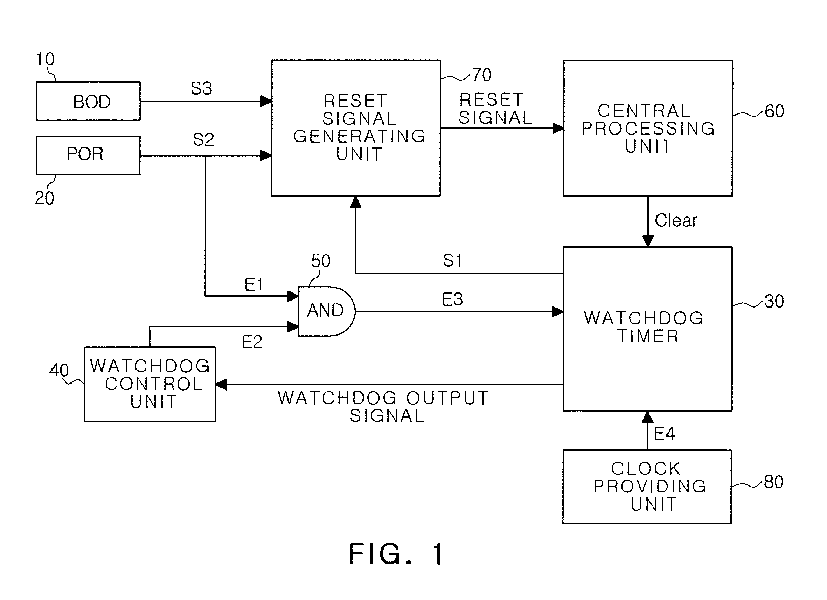

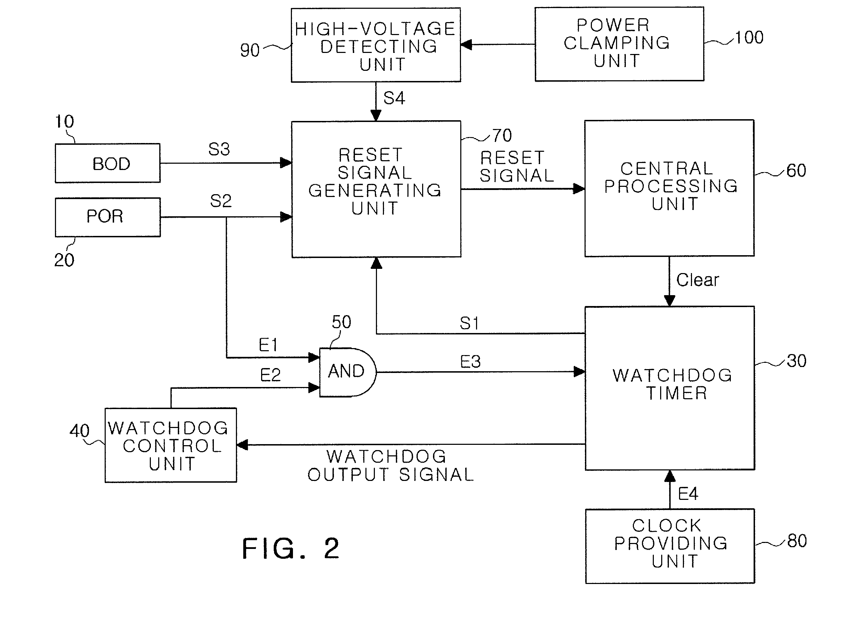

FIG. 1 is a block diagram of an electronic device according to an exemplary embodiment of the present disclosure, and FIG. 2 is a block diagram of an electronic device according to another exemplary embodiment of the present disclosure.

Referring to FIG. 1, an electronic device according to an exemplary embodiment of the present disclosure may include a brownout detector 10, a power-on reset unit 20, a watchdog timer 30, a watchdog control unit 40, a logic circuit(an AND gate) 50, a central processing unit 60, a reset signal generating unit 70, and a clock providing unit 80.

For convenience of illustration, it is assumed in this exemplary embodiment that the reset signal generating unit 70 outputs a reset signal to the central processing unit 60. The reset signal generating unit 70 may output a reset signal to a system-on-chip (SoC) or the like, in addition to the central processing unit 60.

Hereinafter, an element to which the reset signal generating unit 70 outputs a reset signal is referred to as a target.

The brownout detector (BOD) may detect the level of a voltage applied to the electronic device and may output a reset request signal S3 to the reset signal generating unit 70 based on the level of the voltage.

Specifically, if the level of the voltage applied to the electronic device is above a predetermined level, the brownout detector 10 may output the reset request signal S3 to the reset signal generating unit 70.

By virtue of the brownout detector 10, the electronic device may operate at the normal voltage.

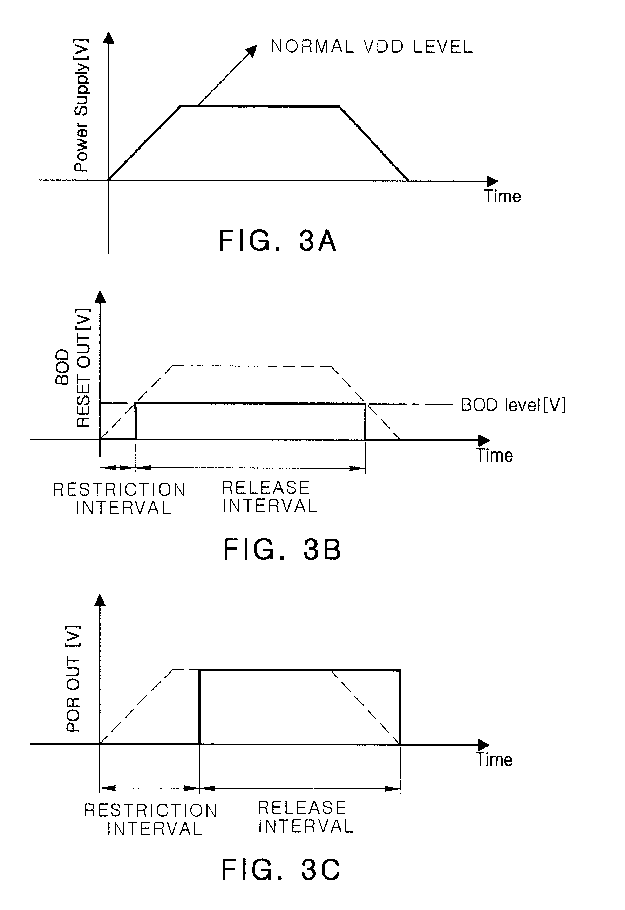

FIGS. 3A through 3C are graphs illustrating waveforms of output signals from the brownout detector and the power-on-reset unit according to the level of voltage applied to the electronic device.

FIG. 3A is a graph illustrating a voltage level waveform applied to the electronic device. FIG. 3B is a graph illustrating a waveform of an output signal from the brownout detector according to the level of voltage applied to the electronic device, and FIG. 3C is a graph illustrating a waveform of an output signal from the power-on reset unit detector according to the level of voltage applied to the electronic device.

Referring to FIGS. 3A and 3B, if the level of voltage applied to the electronic device is below a predetermined voltage level BOD level, the brownout detector 10 may restrict the operation of the electronic device (restriction interval).

If the level of voltage applied to the electronic device is above the predetermined voltage level BOD level, the brownout detector 10 may release the restriction on the operation of the electronic device (release interval).

That is, the brownout detector 10 may output the reset request signal S3 to the reset signal generating unit 70 at the time of transition from the restriction interval to the release interval.

In this manner, the operation of the electronic device according to the exemplary embodiment of the present disclosure is restricted by the brownout detector 10 if the level of voltage applied to the electronic device is below a predetermined level of voltage.

The power-on reset (POR) unit may output a second request signal S2 after a predetermined period of time since power is supplied to the electronic device. The electronic device including the power-on reset unit 20 may be reset at initiation of operation by the reset request signal S2 from the power-on reset unit 20.

Generally, it is desired that systems operate in a designated state right after power is supplied thereto.

After power supplied to the electronic device is stabilized by the power-on reset unit 20, a reset operation is performed and the electronic device may operate in a designated state.

Referring to FIGS. 3A and 3C, the power-on reset unit 20 may restrict the operation of the electronic device for a predetermined period of time after voltage is applied to the electronic device (restriction interval).

After the predetermined period of time (e.g., several ms) since voltage is applied to the electronic device, the power-on reset unit 20 may release the restriction on the operation of the electronic device (release interval).

That is, in the exemplary embodiment of the preset disclosure, the power-on reset unit 20 may output the reset request signal S2 to the reset signal generating unit 70 at the time of transition from the restriction interval to the release interval.

In this manner, the operation of the electronic device according to the exemplary embodiment of the preset disclosure may be restricted by the power-on reset unit 20 for a predetermined period of time after power is supplied.

The power-on reset unit 20 may output an enable signal E1 to the watchdog timer 30. The enable signal E1 may refer to a signal to operate the watchdog timer 30 normally.

While normal voltage is applied to the electronic device and the normal voltage is stabilized, the power-on reset unit 20 may always operate normally.

Therefore, the watchdog timer 30 is operated based on the enable signal E1 from the power-on reset unit 20 and thus may operate normally irrespective of malfunction of a target.

Further, in an exemplary embodiment, the power-on reset unit 20 may output the enable signal E1 to the watchdog timer 30 when it outputs the reset request signal S2.

The watchdog timer 30 is an element that monitors conditions of a system and restores it. That is, the watchdog timer 30 may reset a target if the target malfunctions and is not capable of restoring it by itself.

To this end, the watchdog timer 30 may be updated by the target regularly. If the watchdog timer 30 does not receive a clear signal (update signal) from the target within a predetermined period, the watchdog timer 30 may output a reset request signal S1.

In other words, the watch dog timer 30 may output the reset request signal S1 if waiting time for a response from the target is expired.

The watchdog timer 30 may include a plurality of control logic elements (e.g., flip-flops) and the flip-fops may output a watchdog output signal.

The type of the watchdog output signal may include a normal-state signal D1, an off-state signal D2 and an other-state signal D3. The normal-state signal D1 represents that the watchdog timer 30 is operable normally.

The off-state signal D2 is output when it is necessary to interrupt the watchdog timer 30 for a predetermined period of time in a particular situation such as system development or software upgrade.

If noise or ESD is introduced from the outside so that a reset signal precedes supply voltage (abnormal reset state), the watchdog timer 30 may malfunction. In addition, the flip-flops that configure the watchdog timer 30 go in an unknown state and may not output signals correctly.

When this abnormal reset state occurs, the flip-flops output the other-state signal D3.

The watchdog control unit 40 may map the received watchdog output signal onto a watchdog control signal. The type of the watchdog control signal may include "1" which represents enablement and "0" which represents disablement.

That is, the watchdog control unit 40 may assign the normal-state signal D1 and the other-state signal D3 among the watchdog output signals to a first region and may map the first region onto the watchdog control signal "1."

Then, in a particular situation when the watchdog timer 30 has to be interrupted, the watchdog control unit 40 may assign the received off-state signal D2 to a second region and may map the second region onto the watchdog control signal "0." The type of the off-state signal D2 may be modified by a user's choice.

**<Table 1>**

| Watch-dog Output Signal | Watch-dog Control Signal |
|---|---|
| 11111111(D1) | 1 |
| 10101010(D2) | 0 |
| Others (D3) | 1 |

Referring to Table 1, a watchdog output signal of 8-bit may be assumed. When a user designates the watchdog output signal "10101010" as the off-state signal D2, the watchdog control unit 40 that has received "101010" may output the watchdog control signal "0."

On the contrary, when the normal-state signal D1, i.e., "11111111" is received, or when the other-state signal D3 including all other 8-bit inputs is received, the watchdog control unit 40 may output "1." Accordingly, the watchdog control unit 40 always outputs the watchdog control signal "1" except when a user has designated as a particular situation (off-state).

The And gate 50 may enable or disable the watchdog timer 30 by having the enable signal E1 from the power-on reset unit 20 and the watchdog output signal from the watchdog control unit 40 as input values.

The AND gate 50 may output the enable signal E3 only when all of the input values are "1" so as to operate the watchdog timer 30. Here, since the enable signal E1 is output from the power-on reset unit 20 after a predetermined period of time since power is supplied, it is always "1."

Therefore, when the watchdog control signal is "1," the AND gate 50 may output the enable signal E3 so as to operate the watchdog timer 30. When the watchdog control signal is "0, " the AND gate 50 outputs the disable signal, i.e., "0," the watchdog timer 30 is not operated.

After receiving the enable signal E3, the watchdog timer 30 exits from a malfunction state to enter a normal state. As a result, the watchdog timer 30 may output the reset request signal S1 to the reset signal generating unit 70 after a predetermined period of time.

In an exemplary embodiment of the present disclosure, if the reset signal precedes the supply voltage so that the normal reset operation is not possible (a particular situation when the watchdog timer 30 cannot output the normal reset request signal S1), the other-state signal D3 is transmitted from the flip-flops to the watchdog control unit 40.

When this happens, the watchdog control unit 40 may output "1" on which the other-state signal is mapped. Then, when the AND gate 50 receives the "1," it may output the enable signal E3 so as to operate the watchdog timer 30 normally.

The electronic device according to an exemplary embodiment of the present disclosure may include the watchdog timer 30 that always operates normally except when the off-state (D2) designated by a user.

The clock providing unit 80 may provide clock information to the watchdog timer 30 and the watchdog timer 30 may determine an update period based on the clock information.

Further, the clock providing unit 80 may output an enable signal E4 to the watchdog timer 30.

While normal voltage is applied to the electronic device and the normal voltage is stabilized, the clock providing unit 80 may always operate normally. Further, if the clock providing unit 80 is supplied with predetermined power, it may output the enable signal E4 to the watchdog timer 30.

Therefore, the watchdog timer 30 is operated based on the enable signal E4 from the clock providing unit 80 and thus may operate normally irrespective of malfunction of the target.

As described above, in an exemplary embodiment of the present disclosure, in the normal state, the watchdog timer 30 may receive enable signals E1 and E4 from the power-on reset unit 20 or the clock providing unit 80 to be operated by the enable signals E1 and E4.

Accordingly, even if the target malfunctions, the watchdog timer 30 may receive the enable signals E1 and E4 normally and may perform its functions normally.

As a result, the watchdog timer 30 may restore the target by applying a reset signal to the target that malfunctions.

Referring to FIG. 2, the electronic device according to an exemplary embodiment may further include a high-voltage detector 90 and a power clamping unit 100.

The power clamping unit 100 may limit the level of voltage applied to the electronic device.

Specifically, when voltage above the rated voltage is applied to the electronic device, the power claming unit 100 may limit the voltage within the rated voltage and may subtract surge current from it so as to protect the circuits.

The high-voltage detector 90 may detect the level of applied voltage and may output a reset request signal S4 to the reset signal generating unit 70 when the level of the voltage is moved from a dangerous range to a safe range.

Further, the high-voltage detector 90 may acquire voltage level information from the power clamping unit 100.

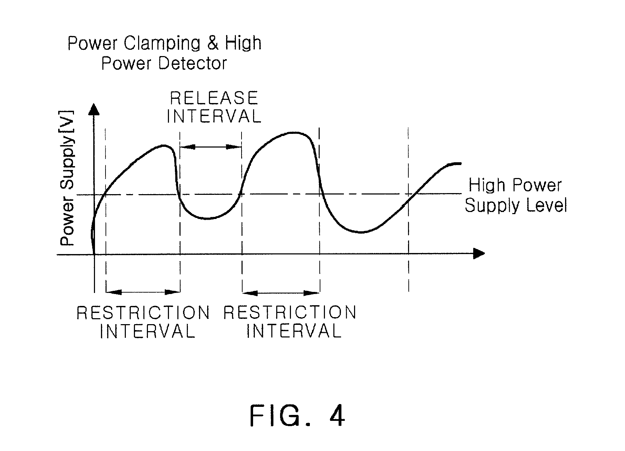

FIG. 4 is a graph illustrating a waveform of an output signal from the high-voltage detector according to the level of voltage applied to an electronic device.

Referring to FIG. 4, if the level of voltage applied to the electronic device is above a predetermined level High Power Supply Level (dangerous range), the high-voltage detector 90 may restrict the operation of the electronic device (restricted interval).

If the level of voltage applied to the electronic device is below a predetermined level High Power Supply Level (dangerous range) , the high-voltage detector 90 may release the restriction on the operation of the electronic device (release interval).

That is, in another exemplary embodiment of the preset disclosure, the high-voltage detector 90 may output the reset request signal S4 to the reset signal generating unit 70 at the time of transition from the restriction interval to the release interval.

In this manner, the operation of the electronic device according to this exemplary embodiment of the present disclosure is restricted by the high-voltage detector 90 if the level of voltage applied to the electronic device is above a predetermined level of voltage.

The reset signal generating unit 70 may output a reset signal to the target based on the reset request signals S3, S2, S1, S4 from the brownout detector 10, the power-on reset unit 20, the watchdog timer 30, and the high-voltage detector 70, respectively.

In an exemplary embodiment of the present disclosure, the watchdog timer 30 of the electronic device may operate correctly even if the central processing unit (target) malfunctions.

Further, in the electronic device according to an exemplary embodiment of the present disclosure, the watchdog control unit 40 may operate the watchdog timer 30 normally even if the central processing unit (target) and the watchdog timer 30 malfunction temporarily due to external factors. After returning to the normal state from the malfunction state, the watchdog timer 30 may generate a normal reset to restore the system.

Further, in an exemplary embodiment of the present disclosure, the electronic device may restore the system using various methods in various abnormal voltage situations (ESD, low voltage, and noise injection).

As described above, the electronic device according to an exemplary embodiment of the present disclosure may be re-booted by a reset signal so that it operates normally, after recovering from abnormal voltage to normal voltage. Therefore, the electronic device does not undergo a system error in an abnormal voltage situation and may always perform its normal functions after supply voltage is stabilized.

As set forth above, according to exemplary embodiments of the present disclosure, reset can be generated internally in a system so as to restore from an abnormal state even if a CPU and watchdog timer malfunction (abnormal state) due to certain external factors (such as noise).

Further, an electronic device can be provided capable of preventing battery discharge which possibly occurs when a CPU and a watchdog timer malfunction.

While exemplary embodiments have been shown and described above, it will be apparent to those skilled in the art that modifications and variations could be made without departing from the spirit and scope of the present disclosure as defined by the appended claims.

## Claims

1. An electronic device, comprising;
a watchdog timer outputting a watchdog output signal containing system state information;
a watchdog control unit outputting a watchdog control signal based on the watchdog output signal;
a power-on reset unit outputting a first enable signal after a predetermined period of time after power has been supplied; and
a logic circuit outputting a gate signal to the watchdog timer based on the watchdog control signal and the first enable signal.

2. The electronic device of claim 1, wherein the watchdog control unit
maps an off-state watchdog output signal corresponding to an operation interruption state of the watchdog timer onto a disable watchdog control signal,
maps a normal-state watchdog output signal corresponding to an normal operation state of the watchdog timer onto a second enable watchdog control signal, and
maps an other-state watchdog output signal corresponding to all other states of the watchdog timer onto a second enable watchdog control signal, except for the off-state and the normal-state watchdog output signals.

3. The electronic device of claim 2, wherein if the watchdog timer operates normally,
the watchdog timer outputs the normal-state watchdog output signal,
the watchdog control unit outputs the second enable watchdog control signal on which the normal-state watchdog output signal is mapped, and
the logic circuit outputs a third enable gate signal to operate the watchdog timer normally.

4. The electronic device of claim 3, wherein the watchdog timer outputs a first reset request signal based on the received third enable gate signal, and
the electronic device further includes a reset signal generating unit outputting a reset signal based on the first reset request signal from the watchdog timer, wherein the power-on reset unit outputs a second reset request signal to the reset signal generating unit after a predetermined period of time after power has been supplied.

5. The electronic device of claim 4, wherein the power-on reset unit outputs the first enable signal to the watchdog timer when the second reset request signal is output.

6. The electronic device of claim 4, further comprising a clock providing unit providing clock information to the watchdog timer, wherein the clock providing unit outputs a fourth enable signal to the watchdog timer when predetermined power is supplied.

7. The electronic device of claim 4, further comprising a brownout detector detecting a level of applied voltage and outputting a third reset request signal to the reset signal generating unit based on the level of the voltage.

8. An electronic device, comprising;
a watchdog timer outputting a watchdog output signal corresponding to an abnormal state of a system when an abnormal reset state occurs;
a watchdog control unit outputting a watchdog control signal including enable information based on the watchdog output signal corresponding to the abnormal state of the system;
a power-on reset unit outputting a first enable signal after a predetermined period of time after power has been supplied; and
a logic circuit outputting a gate signal so that the watchdog timer operates normally based on the watchdog control signal including the enable information and the first enable signal.

9. The electronic device of claim 8, wherein the watchdog timer outputs a first reset request signal to a target based on the gate signal, and
the electronic device further includes a reset signal generating unit outputting a reset signal based on the first reset request signal from the watchdog timer, wherein the power-on reset unit outputs a second reset request signal to the reset signal generating unit after a predetermined period of time after power has been supplied.

10. The electronic device of claim 9, wherein the power-on reset unit outputs the first enable signal to the watchdog timer when the second reset request signal is output.
